# EUROPÄISCHE PATENTSCHRIFT

(11) **EP 3 383 235 B1**
(45) Veröffentlichungstag und Bekanntmachung des Hinweises auf die Patenterteilung: **25.12.2019**
(21) Anmeldenummer: 16801529.5
(22) Anmeldetag: 28.11.2016
(51) Int. Cl.: A47J 31/36, A47J 31/44

(54) **GETRÄNKEZUBEREITUNGSMASCHINE**
MACHINE FOR MAKING BEVERAGES
MACHINE DE PRÉPARATION DE BOISSONS

(30) Priorität: 03.12.2015 EP 15197879
(43) Veröffentlichungstag der Anmeldung: 10.10.2018
(73) Patentinhaber: Tchibo (Schweiz) AG, 8304 Wallisellen (CH)
(72) Erfinder: STASCH, Rafael, 59757 Arnsberg (DE)
(74) Vertreter: Frei Patent Attorneys
(86) Internationale Anmeldenummer: PCT/EP2016/079011
(87) Internationale Veröffentlichungsnummer: WO 2017/093191

(56) Entgegenhaltungen:
- EP-A1- 3 028 608
- US-A1- 2007 034 085
- US-A1- 2013 152 797

## Beschreibung

Die Erfindung betrifft das Gebiet der Geräte zum Zubereiten von Heiss- und/oder Kaltgetränken. Sie betrifft im Speziellen eine Getränkezubereitungsmaschine zum Zubereiten eines Getränks aus einer Portionskapsel.

Getränkezubereitungsmaschinen, die ein in eine Portionskapsel eingebrachtes Extraktionsgut verwenden, sind beispielsweise als Kaffee- oder Espressomaschinen bekannt. In vielen entsprechenden Systemen wird die Portionskapsel direkt durch den Benutzer in ein Brühmodul, welches eine Brühkammer aufweist, eingebracht. Anschliessend wird die Brühkammer manuell unter Verwendung eines Bedienhebels oder automatisch über einen elektrischen Antrieb verschlossen. Während des Verschliessens wird die Portionskapsel in der Regel an zwei gegenüberliegenden Seiten angestochen. Im eigentlichen Brühvorgang wird dann auf der einen Seite eine Extraktionsflüssigkeit, oftmals heisses Wasser, eingeleitet und das Extraktionsprodukt wird auf der zweiten Seite ausgeleitet. Nach dem Brühvorgang wird die Brühkammer wieder manuell oder automatisch geöffnet und die gebrauchte Portionskapsel wird ohne weiteres Zutun des Benutzers in einen Kapselbehälter ausgeworfen.

Insbesondere automatisierten Lösungen der eben beschriebenen Zubereitung eines Getränks unter Verwendung einer Portionskapsel haben das Problem, dass eine fehlende oder falsch in das Brühmodul eingebrachte Portionskapsel, beziehungsweise das Vorhandensein eines Fremdkörpers, der zufällig oder als Resultat häufiger Benutzung beziehungsweise eines vorhergehenden Brühvorgangs in die Brühkammer gelangt ist, nicht ohne zusätzliche Massnahmen unmittelbar festgestellt werden kann.

Ähnlich gelagerte Problemstellungen treten auch bei vollautomatischen, nicht auf Portionskapseln beruhenden Getränkezubereitungsmaschinen auf. So wird in WO 2008/105017 A1 ein Methode gezeigt, mit welcher sichergestellt werden kann, dass immer die richtige Menge Kaffeepulver automatisch in die Brühkammer abgegeben wird. Die Methode basiert auf dem Messen des Stromverbrauchs des elektrischen Antriebs, mit welchem die Brühkammer geschlossen wird, und einer darauf basierenden Anpassung der Füllmenge im darauffolgenden Brühvorgang. Ferner ist ein Alarmwert für den Stromverbrauch vorgesehen. Sobald dieser Alarmwert beim Schliessen der Brühkammer erreicht wird, stoppt der elektrische Antrieb und die Brühkammer wird entladen, ohne dass ein Brühvorgang stattgefunden hat.

Allerdings lassen sich Lösungsansätze, wie sie bei vollautomatischen, nicht auf Portionskapseln beruhenden Getränkezubereitungsmaschinen Anwendung finden, nicht ohne weiteres auf Getränkezubereitungsmaschinen mit Portionskapseln übertragen. Beispielsweise führt die Verwendung einer Portionskapsel dazu, dass der Druck beim Verschliessen der Brühkammer nicht konstant ansteigt. Ferner sind die Brühkammern anders ausgelegt und verfügen über zusätzliche Bauteile, beispielsweise zum Anstechen der Portionskapsel und zum Einleiten und Abführen einer Flüssigkeit aus derselben. Auch kann die Portionskapsel nur als Ganze in die Brühkammer eingeführt und wieder aus dieser ausgeworfen werden.

US 2013/0152797 A1 und das aus derselben Familie stammende Patent EP 2 608 705 B1 zeigen eine motorisierte, Portionskapseln verwendende Getränkemaschine, welche neben den sogenannten Aktivierungseinrichtungen "Motor", "Übertragungseinrichtung" zwischen Motor und einer bewegbaren Baugruppe und "Wasserzufuhreinrichtung" eine Steuereinrichtung aufweist, die einen elektrischen Parameter, beispielsweise die Stromaufnahme des die Brühkammer verschliessenden Motors, misst, diese Messung als Funktion der Zeit mit einer Referenz vergleicht und basierend auf diesem Vergleich bei einer zu hohen Abweichung beispielsweise den Motor stoppt oder drosselt. Nachteilig daran ist eine im Falle von Verschmutzungen oder dergleichen zu erwartende Fehleranfälligkeit.

Es ist eine sich der Erfindung stellende Aufgabe, eine Vorrichtung zur Verfügung zu stellen, welcher die Nachteile des Standes der Technik überwindet. Es ist insbesondere eine Aufgabe der Erfindung, eine Getränkezubereitungsmaschine zur Verfügung zu stellen, welche zuverlässig auf Fehlfunktionen und/oder Unregelmässigkeiten während des auf einer Portionskapsel basierenden Brühvorgangs reagiert und ausserdem ermöglicht, dass bei einer Fehlfunktion angemessen reagiert werden kann, bspw. indem der Benutzer bei der Behebung der Fehlfunktion unterstütz und instruiert wird.

Diese Aufgaben werden gelöst durch die in den Patentansprüchen definierte Getränkezubereitungsmaschine.

Eine Getränkezubereitungsmaschine der erfindungsgemässen Art ist als Getränkezubereitungsmaschine zum Zubereiten eines Getränks, insbesondere eines Heissgetränks wie Kaffee oder Tee, aus einer Portionskapsel ausgebildet.

Die Getränkezubereitungsmaschine weist ein Gehäuse, eine Kapseleinlegeöffnung, ein erstes und ein zweites Brühmodulteil, einen elektrischen Antrieb sowie eine Steuerung auf.

Das Gehäuse umfasst die Kapseleinlegeöffnung. Über die Kapseleinlegeöffnung ist eine Portionskapsel in die Getränkezubereitungsmaschine, insbesondere in eine Brühposition, einbringbar.

Ergänzend kann das Gehäuse optional einen Verschluss für die Kapseleinlegeöffnung umfassen, welche in geschlossenem Zustand die Kapseleinlegeöffnung von der Gehäuseaussenseite her vollständig bedeckt. Der Verschluss kann als ein sich dem Gehäuse entlang bewegender Schieber oder als ein sich vornehmlich senkrecht zum Gehäuse bewegender Hebelarm ausgelegt sein. Er kann als Sicherheitselement zur Vermeidung, dass Fremdkörper durch die Kapseleinlegeöffnung in die Getränkezubereitungsmaschine geraten und/oder als Abschirmung gegenüber Verschmutzung und Licht dienen. Letzteres ist mit Blick auf einen Einsatz von optischen Elementen, beispielsweise für eine Kapselerkennung, von Bedeutung.

Das zweite Brühmodulteil ist relativ zum ersten Brühmodulteil bewegbar. Die Bewegung des zweiten Brühmodulteils wird durch den elektrischen Antrieb angetrieben und durch die Steuerung geregelt. Erstes und zweites Brühmodulteil sind dahingehend ausgebildet, dass sie in einer bestimmten relativen Lage zueinander eine Brühkammer bilden, welche die sich in der Brühposition befindende Portionskapsel beim Brühvorgang mindestens teilweise umgibt und welche dazu eingerichtet ist, durch das Einleiten einer Extraktionsflüssigkeit, insbesondere einer Brühflüssigkeit, in die Portionskapsel ein Extraktionsgut, insbesondere ein Brühgetränk, herzustellen beziehungsweise zu brühen und dieses aus der Portionskapsel abzuleiten.

Die Steuerung ist ferner dazu eingerichtet, eine aktuelle Position des zweiten Brühmodulteils relativ zum ersten Brühmodulteil zu bestimmen, und zwar nicht nur an den Endpositionen, wie das aus dem Stand der Technik bekannt ist, sondern auch dazwischen, d.h. im Normalbetrieb jederzeit. Das kann über das Zählen der Anzahl von Schritten geschehen, um welche der elektrische Antrieb das zweite Brühmodulteil relativ zum ersten bewegt hat.

Insbesondere kann das zweite Brühmodulteil relativ zum ersten Brühmodulteil eine Vielzahl von Positionen oder ein Kontinuum an Positionen zwischen den Endpositionen einnehmen. Beispielsweise kann das zweite Brühmodulteil relativ zum ersten Brühmodulteil mehr als 10, insbesondere mehr als 100 oder mehr als 500 Positionen einnehmen. Pro Schritt ändert das zweite Brühmodulteil seine relative Lage zum ersten Brühmodulteil um eine Position auf das erste Brühmodulteil zu oder um eine Position vom ersten Brühmodulteil weg. Dadurch kann die Steuerung eine jederzeit aktuelle Position des zweiten Brühmodulteils relativ zum ersten Brühmodulteil insbesondere durch das Zählen von Schritten bestimmen.

Die Endpositionen können insbesondere durch eine Position, in welcher die Brühkammer gebildete wird, und durch eine Position, in welcher sich erstes und zweites Brühmodulteil in einer durch die Bauweise des Brühmoduls gegebenen, maximalem Abstand zueinander befinden, gegeben sein.

Ein solches Zählen der Schritte basiert insbesondere auf einem Signal, welches aus der Speisung des elektrischen Antriebs (Schrittmotor-Ansteuerungsimpulse), durch das effektive Drehen des Motors oder damit fest verbundener Teile (Dreh-Impulse) oder durch die Positionsänderung des zweiten Brühmodulteils oder damit fest verbundener Bauteile generiert wird.

Beispielsweise kann das Signal durch einen Hall-Sensor, welcher die Umdrehungen des elektrischen Antriebs als Dreh-Impulse ausgibt, erzeugt werden.

Das Signal, auf welchem die relative Position basiert, gibt eine Veränderung der relativen Lagen des zweiten Brühmodulteils in diskreten Schritten wieder, d.h. erst wenn sich die besagte relative Lage um eine bestimmten Wert ändert, ändert sich das generierte Signal.

In Ausführungsformen weist die Steuerung ferner eine Messvorrichtung auf, welche eingerichtet ist, ständig, bspw. ggf. bei jedem Schritt einen die Leistungsaufnahme des elektrischen Antriebs charakterisierenden Parameter, insbesondere den Stromverbrauch, zu messen.

In Ausführungsformen ist die Steuerung ergänzend ausgelegt, den gemessenen Parameter mit einem ersten Vergleichswert zu vergleichen. Durch den Vergleich wird festgestellt, ob eine Stoppbedingung erfüllt ist. Die Stoppbedingung ist insbesondere dann erfüllt, wenn eine Fehlfunktion der Getränkezubereitungsmaschine vorliegt, welche zu einer Gefährdung des Benutzers, beispielsweise durch unkontrolliertes Austreten von heissem Wasser, zu Schäden an der Maschine (speziell dem Antrieb) und/oder zu einem ungenügenden Resultat des Brühvorgangs führen könnte. Falls die Stoppbedingung erfüllt ist, wird der elektrische Antrieb durch die Steuerung sofort gestoppt.

In Ausführungsformen ist die Steuerung ferner eingerichtet festzustellen, ob die Stoppbedingung an einer für einen Brühvorgang charakteristischen Position des zweiten Brühmodulteils erfüllt wurde oder ob das Erfüllen der Stoppbedingung einer Fehlfunktion der Getränkezubereitungsmaschine geschuldet ist. Insbesondere stellt eine im Brühmodul falsch positionierte Positionskapsel eine Fehlfunktion dar, welche zu einem Erfüllen der Stoppbedingung führt.

Beispiele von charakteristischen Positionen sind eine offene Position, eine geschlossenen Position, eine Park-Position oder eine Service-Position. Bei den verschiedenen charakteristischen Positionen handelt es sich um Positionen relativ zum ersten Brühmodulteil, welche für den Brühvorgang oder für eine Fehlerbehebung charakteristisch sind.

Befindet sich das zweite Brühmodulteil in der offenen Position, so kann die Portionskapsel durch einen Benutzer oder - für ein automatisiertes Einlegen bspw. im kommerziellen Betrieb - eine Einbringvorrichtung über die Kapseleinlegeöffnung in eine Position zwischen erstem und zweiten Brühmodulteil gebracht werden, aus welcher diese automatisch und mit einer geringen Wahrscheinlichkeit einer Fehlpositionierung in die Brühposition gebracht werden kann.

In der geschlossenen Position bildet das zweite Brühmodulteil zusammen mit dem ersten Brühmodulteil die besagte Brühkammer. In einer Ausführungsform des ersten und zweiten Brühmodulteils stehen dieselben in der geschlossenen Position in direktem Kontakt zueinander. Alternativ kann die geschlossene Position auch dadurch definiert sein, dass die Portionskapsel flächig und satt an den beiden einander direkt gegenüberliegenden Flächen des ersten und zweiten Brühmodulteils aufliegt.

Die Park-Position wird durch das zweite Brühmodulteil eingenommen, wenn ein Brühvorgang abgeschlossen ist und eine weitere Kapsel zwar in die Maschine eingelegt werden kann, aber noch nicht in die Brühkammer gelangen soll (bspw. weil ein Kapselerkennungsschritt stattfinden soll, bspw. gemäss der europäischen Patentanmeldung 14 195 680.5). Ergänzend kann in der Park-Position eine Portionskapsel, welche sich nach einem Brühvorgang, beziehungsweise nach Einnahme einer der Park-Position vorhergehenden geschlossenen Position, zwischen dem ersten und zweiten Brühmodulteil befindet, durch die Wirkung der Gravitation nach unten in einen Kapselbehälter ausgeworfen werden.

Eine optionale Service-Position kann vorgesehen sein, um bei Betriebsstörungen eine möglichst gute Zugänglichkeit der relevanten Teile zu gewährleisten. Insbesondere kann sie so gewählt sein, dass eine sich zwischen erstem und zweitem Brühmodulteil befindliche Portionskapsel durch die Kapseleinlegeöffnung entfernt werden kann.

In einer Ausführungsform entspricht der erste Vergleichswert einem Wert, welchen der durch die Messvorrichtung gemessene Parameter des elektrischen Antriebes nicht überschreiten darf, also beispielsweise einem maximalen Stromverbrauch.

Ergänzend kann ein Abgleich mit einem zweiten Vergleichswert stattfinden, welcher kleiner als der erste Vergleichswert ist und gegen welchen der gemessene Parameter ebenfalls, bspw. für jeden Schritt, verglichen wird. Dieser zweite Vergleichswert ist kleiner als der erste Vergleichswert, und ein Überschreiten des zweiten Vergleichswertes führt nicht zwingend zu einem Stoppen des elektrischen Antriebs. Vielmehr wird bei einem Überschreiten des zweiten Vergleichswerts bei gleichzeitigem Unterschreiten des ersten Vergleichswerts ein Warnsignal generiert. Dadurch lassen sich Ereignisse in Betrieb der Getränkezubereitungsmaschine der vorgängig beschriebenen Art feststellen, welche nicht zwingend ein sofortiges Unterbrechen des Brühvorgangs nach sich ziehen müssen.

Ergänzend kann bei jedem übermittelten Warnsignal die Position des zweiten Brühmodulteils, bei welchem das Warnsignal aufgetreten ist, festgestellt und gegebenenfalls mit einer Liste, welche Positionen von zu erwartenden Ereignissen umfasst, abgeglichen werden.

Weiter kann ein Fenster, in welchem der gemessene Parameter mit dem zweiten Vergleichswert verglichen wird auf eine Bereich beschränkt sein, welcher kleiner als der Bereich ist, welcher für die Bewegung des zweiten Brühmodulteils von einer charakteristischen Position in eine andere charakteristische Position benötigt wird. Dies verhindert das Erzeugen von Warnsignalen unmittelbar vor der Einnahme einer charakteristischen Position (offene Position, geschlossene Position).

In einer Ausführungsform der Getränkezubereitungsmaschine weist diese ferner einen Datenspeicher auf. In diesem kann jeder Wert des durch die Messvorrichtung gemessenen Parameters des elektrischen Antriebs sowie die Angabe der Position des zweiten Brühmodulteils, bei welcher der Wert gemessen wurde, abgespeichert werden. Dadurch kann eine Messkurve generiert werden, welche den gemessenen Parameter des elektrischen Antriebs in Abhängigkeit der Position des zweiten Brühmodulteils wiedergibt.

Der Datenspeicher kann Teil der Steuerung sein.

Ergänzend kann der gemessene Parameter weiterhin nach jedem Schritt mit dem zweiten Vergleichswert verglichen werden, und daraus resultierende Warnsignale können ebenfalls abgespeichert werden.

Ergänzend kann die Steuerung der Getränkezubereitungsmaschine eingerichtet sein, Maxima in der gespeicherten Messkurve, welche über dem zweiten Vergleichswert aber unter dem ersten Vergleichswert liegen, sowie die Positionen des zweiten Brühmodulteils, bei welchem diese Maxima aufgetreten sind, festzustellen.

Das Feststellen der Maxima kann auf einen Teilbereich der Messkurve, beziehungsweise auf einen Teilbereich der durch das zweite Brühmodulteil eingenommenen Positionen beschränkt sein. Durch das Festlegen eines solchen Auswertebereichs kann beispielsweise verhindert werden, dass Maxima, welche in Zusammenhang mit der Einnahme einer charakteristischen Position stehen, als ungewöhnliche Ereignisse vermerkt werden.

Bei einer Getränkezubereitungsmaschine für eine Portionskapsel wird die Portionskapsel während dem Schliessen der Brühkammer in der Regel auf zwei gegenüberlegenden Seiten angestochen. Das Anstechen der ersten Seite dient dazu, eine Extraktionsflüssigkeit in die Portionskapsel einzuleiten. Das Anstechen der zweiten Seite dient dazu, das Extraktionsprodukt aus der Portionskapsel zu leiten.

Dieses Anstechen der Portionskapsel kann ein Ereignis der vorgängig beschriebenen Art sein, und der zweite Vergleichswert kann so gewählt sein, dass das Anstechen der Portionskapsel detektierbar ist. Bei einem so gewählten zweiten Vergleichswert kann die Getränkezubereitungsmaschine, beziehungsweise die Steuerung, eingerichtet sein, das Anstechen der Portionskapsel über die Position, bei welcher das dazugehörige Maximum auftritt, festzustellen. Ergänzend oder alternativ kann der beim Anstechen auftretende Wert des gemessen Parameters hinzugezogen werden, um das Anstechen zu identifizieren und gegebenenfalls gegenüber einem anderen Ereignis abzugrenzen.

Ergänzend kann das Vorhandensein oder Ausbleiben eines Maximums, welches durch das Anstechen der Portionskapsel verursacht wird, verwendet werden, um festzustellen ob eine Portionskapsel eingelegt ist oder nicht.

Die Getränkezubereitungsmaschine kann eingerichtet sein, nach dem Erfüllen einer Stoppbedingung der vorstehend beschriebenen Art verschiedene Funktionen durchzuführen. Diese Funktionen können insbesondere einzeln oder in Kombination ausgeführt werden. Das Ausführen einzelner oder mehrerer dieser Funktionen kann ausgerichtet sein, die Getränkezubereitungsmaschine wieder in den Normalbetrieb zu versetzen, nachdem die Stoppbedingung aufgrund einer Fehlfunktion der Getränkezubereitungsmaschine, insbesondere bei der Bewegung des zweiten Brühmodulteils, erfüllt wurde. Die Funktionen umfassen:
- Die Interaktion mit dem Benutzer, beispielsweise über ein Display oder über andere optische Mittel wie LEDs, um den Benutzer über zu unternehmende Handlungen zu informieren;
- Die Bestimmung des Füllstandes und/oder der Position von einem oder mehreren Bauteilen der Getränkezubereitungsmaschine, welche nicht integraler Bestandteil der über die Bewegung des zweiten Brühmodulteils gebildeten Brühkammer sind. Diese Bestimmung umfasst beispielsweise die Überprüfung des Füllstandes in einem Kapselbehälter, in welchem die gebrauchten Portionskapseln gesammelt werden, oder das Feststellen der Position des Verschlusses der Kapseleinlegeöffnung. Ersteres kann dazu dienen festzustellen, ob ein voller Auffangbehälter den Kapselauswurf behindert hat oder behindern könnte. Insbesondere die Bestimmung der Position kann ein Erkennen, ob sich der Zustand nach einer Information an den Benutzer zumindest kurzzeitig geändert hat, miteinschliessen. Dies kann dazu dienen festzustellen, ob der Benutzer eine Handlung durchgeführt hat oder nicht.
- Das Starten einer Initialisierungsroutine, innerhalb welcher verschiedene charakteristische Positionen des zweiten Brühmodulteils gemäss Initialisierungsroutine angefahren werden.
- Das Feststellen ob beim Anfahren der verschiedenen charakteristische Positionen, insbesondere beim Anfahren gemäss Initialisierungsroutine, eine Fehlfunktion oder ein Ereignis, auf welches nicht mit einem sofortigen Stoppen des elektrischen Antriebs reagiert werden muss, auftritt und ob eine solche Fehlfunktion oder ein solches Ereignis zweimal hintereinander auftritt, ohne dass die Getränkezubereitungsmaschine zwischen diesen beiden Auftreten die Initialisierungsroutine durch welche die verschiedenen charakteristische Positionen des zweites Brühmodulteils angefahren werden, verlassen hat. Beispielsweise kann bei einem ersten Anfahren der charakteristischen Positionen, die Ursache und der Ort der Fehlfunktion eingeschränkt werden. Darauf basierend können Massnahmen eingeleitet werden, beispielsweise das Anfahren einer bestimmten Position, oder der Benutzer kann zu einer bestimmten Handlung aufgefordert werden. Bei einem zweiten Anfahren der charakteristischen Positionen kann dann festgestellt werden, ob die Ursache der Fehlfunktion oder des Ereignisses behoben werden konnte.
   Beispiele von Ereignissen, auf welche nicht mit einem sofortigen Stoppen des elektrischen Antriebs reagiert werden muss, sind: das Hineingleiten einer Portionskapsel in ein Führungsmittel aus einer nur näherungsweise korrekten Position, kleinere Rückstände von vorausgehenden Brühvorgängen, Ablagerungen, oder das Anstechen einer Portionskapsel.

In einer Ausführungsform weist der elektrische Antrieb einen Schrittmotor auf. Die Steuerung ist dann ausgelegt, durch den Schrittmotor ausgeführte Schritte zu zählen um die Position zu bestimmen. Zum Zählen der Schritte kann die Steuerung insbesondere auf Betriebssignale der Ansteuerung des Schrittmotors zugreifen. Beispielsweise können das Schalten zwischen den einzelnen Wicklungen des Schrittmotors oder Änderungen im Phasenstrom erfasst werden. Die Anzahl gezählter Schritte seit Verlassen einer charakteristischen Position kodiert wiederum die aktuelle relative Position des zweiten Brühmodulteils.

In einer Ausführungsform der Getränkezubereitungsmaschine - insbesondere wenn der Antrieb keinen Schrittmotor besitzt - weist diese ferner einen Drehgeber oder eine andere Massverkörperung auf. In Ausführungsformen mit Drehgeber wird die Änderung der durch den Drehgeber überwachten Lage um einen bestimmten Wert (um einen Schritt) durch das Übermitteln eines Signals, insbesondere eines Impulses, beziehungsweise durch eine Intensitätsänderung, angezeigt. Die Steuerung ist dabei dahingehend ausgelegt, die übermittelten Signale zu zählen. Die Anzahl übermittelter Signale seit Verlassen einer charakteristischen Position erlaubt wiederum die Bestimmung der aktuellen relativen Position des zweiten Brühmodulteils. Auch die Verwendung einer Massverkörperung mit einer Kodierung der absoluten Position ist möglich.

In einer Ausführungsform weist die Getränkezubereitungsmaschine ferner ein Kapselerkennungsmodul auf, welches dazu eingerichtet ist, eine bspw. optische Eigenschaften der Portionskapsel zu erfassen und darauf basierend zu erkennen, ob eine Portionskapsel in die Getränkezubereitungsmaschine eingebracht ist und um welchen Portionskapseltyp es sich handelt. Insbesondere kann durch das Kapselerkennungsmodul anhand einer erkannten Kodierung der Kapsel festgestellt werden, ob es sich um eine Kaffee-Lungo-Kapsel oder eine Espressokapsel oder ggf. eine Reinigungs- oder Entkalkungskapsel handelt. Ergänzend kann durch das Kapselerkennungsmodul festgestellt werden, welche Art Kaffee (oder Tee) unter Verwendung der eingebrachten Portionskapsel zubereitet werden soll.

Das Kapselerkennungsmodul kann räumlich in der Getränkezubereitungsmaschine so angeordnet sein, dass eine Portionskapsel, welche über die Kapselöffnung in die Getränkezubereitungsmaschine eingebracht wird, zuerst das Kapselerkennungsmodul durchquert, bevor sie in das Brühmodul, beziehungsweise in das Gebiet zwischen dem ersten und zweiten Brühmodulteil, gelangt. Ein solcher Aufbau ist in der europäischen Patentanmeldung 14 195 680.5 beschrieben, auf welche hier explizit Bezug genommen wird.

Das Kapselerkennungsmodul kann aufweisen:
- Einen optischen Sensor, insbesondere eine Kamera, zum Erfassen von optischen Eigenschaften der Portionskapsel, welche sich an einer Kapselerkennungsposition befindet;
- ein Kapselerkennungsfenster aus einem transparenten Material zwischen der Kapselerkennungsposition und der Kamera;
- einen Lüfter zum Erzeugen eines Luftstroms auf der zur Kapselerkennungsposition hin gelegenen Seite des Kapselerkennungsfensters;
- eine Lichtquelle zur Beleuchtung der Portionskapsel an der Kapselerkennungsposition, wobei die Lichtquelle auf der Seite des Kapselerkennungsfensters zum optischen Sensor hin angeordnet ist; und/oder
- einen Diffusor für von der Lichtquelle erzeugtes Licht.

Ein Verfahren zum Betreiben einer Getränkezubereitungsmaschine, welche aus einer Portionskapsel ein Getränk zubereitet und bei welcher die Brühkammer durch das durch einen elektrischen Antrieb verursachte Bewegen eines zweiten Brühmodulteils relativ zu einem ersten Brühmodulteil gebildet wird, insbesondere einer Getränkezubereitungsmaschine der vorhergehend beschrieben Art, weist die folgenden Schritte auf:
- Feststellen, ob das zweite Brühmodulteil eine oder mehrere während des Verfahrens anzufahrende Position korrekt anfährt anhand der gemessenen Position. Bei den korrekt anzufahrenden Positionen handelt es sich insbesondere um die geschlossene Position sowie eventuell ggf. die weiteren zuvor beschriebenen charakteristischen Positionen "offene Position", "Park-Position" und/oder "Service-Position". Falls ein korrektes Anfahren der geschlossenen Position festgestellt wurde, kann das Verfahren zum Betreiben der Getränkezubereitungsmaschine dazu eingerichtet sein, den Brühvorgang zu starten. Die Getränkezubereitungsmaschine kann ferner befähigt sein, unterschiedliche Brühvorgänge auszuführen, beispielsweise einen Standard-Brühvorgang für Kaffee, einen Espresso-Brühvorgang oder einen Tee-Brühvorgang.
- Stoppen des elektrischen Antriebes und Starten einer Initialisierungsroutine zur Rückversetzung der Getränkezubereitungsmaschine in den Normalbetrieb, falls eine Position nicht korrekt angefahren wurde. Das Stoppen des elektrischen Antriebs kann dabei durch das Erfüllen einer Stoppbedingung der vorgängig beschriebenen Art ausgelöst werden, das heisst aus einem Vergleich zwischen einem ersten Vergleichswert mit einem gemessenen Parameter des elektrischen Antriebs resultieren.

In einer Ausführungsform weist das Verfahren ferner folgende Schritte einzeln oder in Kombination auf:
- Erkennung, ob eine Portionskapsel in die Kapseleinlegeöffnung eingelegt wurde. Die Erkennung kann dabei über ein Kapselerkennungsmodul der vorher beschriebenen Art geschehen. Alternativ ist es auch möglich, das Vorhandensein einer Portionskapsel aus dem Auftreten von Stromaufnahmespitzen in der bereits beschriebenen Art festzustellen.
- Erkennung des Typs der eingelegten Portionskapsel, insbesondere durch Verwendung eines Kapselerkennungsmoduls der vorher beschriebenen Art.
- Einschränkung der durch einen Benutzer auswählbaren Betriebsarten, welche durch die Getränkezubereitungsmaschine einnehmbar sind, in Abhängigkeit davon, ob eine Portionskapsel erkannt wurde und/oder in Abhängigkeit des erkannten Portionskapsel-Typs. Beispiele von Betriebsarten, welche durch die Getränkezubereitungsmaschine einnehmbar sind, sind: Ausführen unterschiedlicher Brüh- oder Reinigungsvorgängen (beispielsweise Spülen oder Entkalken) oder Ausführen einer Aufwärmfunktionen (beispielsweise Wärmeplatte zum Vorwärmen des Trinkgefässes). Die Einschränkung kann darin bestehen, dass nur ein Teil aller durch die Getränkezubereitungsmaschine einnehmbaren Betriebsarten durch den Benutzer wählbar sind. Ferner kann das Verfahren zum Betreiben einer Getränkezubereitungsmaschine dahingehend ausgelegt sein, dass basierend auf dem erkannten Portionskapsel-Typs oder dem festgestellten Fehlen einer Portionskapsel eine Betriebsart automatisch eingenommen wird.

In Ausführungsformen für Getränkezubereitungsmaschinen mit Initialisierungsroutine, weist das Verfahren auch mindestens einen der folgenden, zur Initialisierungsroutine gehörenden Schritte auf:
- Bestimmen des Zustandes von einem oder mehreren Bauteilen der Getränkezubereitungsmaschine. Bei den Bauteilen und deren Zuständen handelt es sich insbesondere um den Füllstand eines Kapselbehälters und der Position des Verschlusses.
- Informieren des Benutzers über eine oder mehrere zu unternehmende Handlungen. Solche Handlungen können beispielsweise dazu dienen, eine Portionskapsel aus der Kapseleinlegeöffnung oder dem Gebiet zwischen erstem und zweiten Brühmodulteil zu entfernen, den Kapselbehälter zu leeren, den Verschluss zu schliessen oder eine Service-Hotline zu kontaktieren.
- Feststellen, ob der Benutzer eine der Handlungen durchgeführt hat, beispielsweise indem festgestellt wird, ob sich der Zustand eines Bauteils zumindest vorübergehend geändert hat.
- Anfahren verschiedener Positionen des zweiten Brühmodulteils. Bei den anzufahrenden Positionen handelt es sich insbesondere um die offene und geschlossene Position.
- Feststellen, ob die verschiedenen Positionen korrekt anfahrbar sind. Letzteres geschieht insbesondere durch eine der vorgängig beschriebenen Art.
- Feststellen, ob Ereignisse der vorgängig beschriebenen Art auftreten, insbesondere durch Vergleich eines Parameters des elektrischen Antriebs mit einem zweiten Vergleichswert.
- Beenden der Initialisierungsroutine und Rückkehr der Getränkezubereitungsmaschine in den Normalbetrieb, falls die verschiedenen Positionen korrekt anfahrbar und keine Ereignisse feststellbar sind.
- Feststellen, ob eine Position innerhalb der Initialisierungsroutine zum ersten Mal nicht korrekt angefahren wurde. Falls eine Position innerhalb der Initialisierungsroutine zweimal nicht korrekt angefahren wird, ist das ein Hinweis darauf, dass sich der Fehler nicht ohne Einwirkung von aussen, beispielsweise durch den Benutzer, beheben lässt.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Schnittdarstellung eines Brühmoduls in offener Position mit einem aufgesetztem Kapselerkennungsmodul;
- Fig. 2: eine Explosionsdarstellung des Brühmoduls mit aufgesetztem Kapselerkennungsmodul gemäss Figur 1 (ohne einige der Gehäuseteile);
- Fig. 3: ein Brühmodul in geschlossener Position mit einem aufgesetztem Kapselerkennungsmodul;
- Fig. 4: eine schematische Darstellung einer Getränkezubereitungsmaschine mit maschinell angetriebenen Brühmodulteilen, welche gegen Fehlfunktionen bei der Bewegung der Brühmodulteilen abgesichert ist;
- Fig. 5: eine schematische Darstellung der Funktionsweise einer Getränkezubereitungsmaschine gemäss Figur 4 mit zusätzlichen Funktionen;
- Fig. 6: ein Blockdiagramm eines Verfahrens zum Betreiben einer Getränkezubereitungsmaschine;
- Fig. 7: ein Blockdiagramm einer Initialisierungsroutine zur Fehlerbehebung;
- Fig. 8: eine schematische Kurve der Stromaufnahme in Abhängigkeit der relativen Lage des zweiten Brühmodulteils bei nicht eingelegter Portionskapsel;
- Fig. 9: eine schematische Kurve der Stromaufnahme in Abhängigkeit der relativen Lage des zweiten Brühmodulteils bei eingelegter Portionskapsel; und
- Fig. 10: eine schematische Kurve der Stromaufnahme in Abhängigkeit der relativen Lage des zweiten Brühmodulteils bei einer falsch eingelegten Portionskapsel.

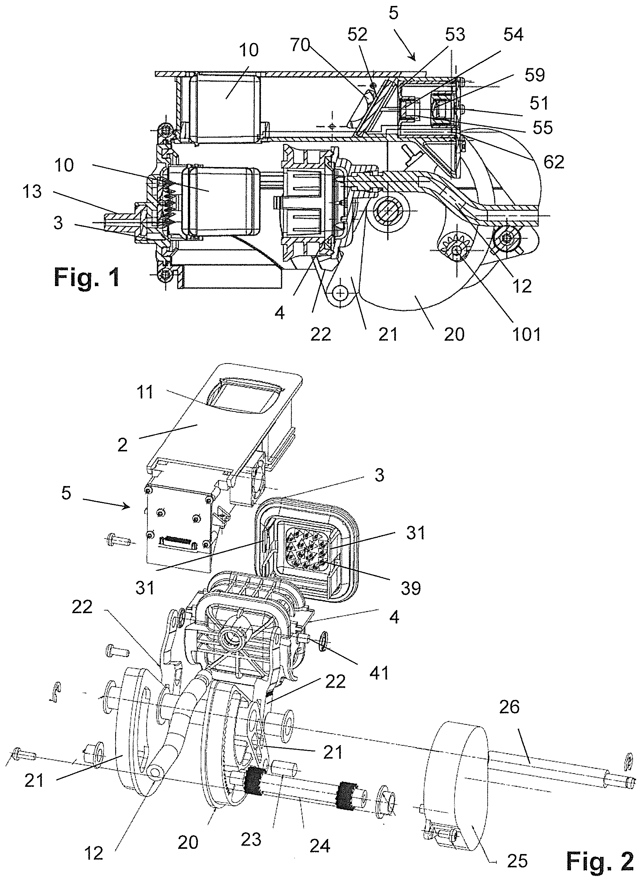

Das Brühmodul 1 gemäss den **Figuren 1 und 2** weist ein äusseres Gehäuse 2 auf. Dieses setzt sich im dargestellten Ausführungsbeispiel aus einem oberen Gehäuseteil, welcher ein Kapselerkennungsmodul 5 umfasst, und einem unteren Gehäuseteil, welcher die Brühmodulteile trägt, zusammen. Im unteren Gehäuseteil sind ein erstes Brühmodulteil 3 (auch Ausleitvorrichtung genannt) und ein zweites Brühmodulteil 4 (auch Injektor genannt) relativ zueinander bewegbar geführt.

Das zweite Brühmodulteil 4 weist Perforationselemente zum Anstechen einer Portionskapsel 10 auf, die über eine Kapseleinlegeöffnung 11 in das Brühmodul 1 einbringbar ist und mindestens teilweise mit einem Extraktionsgut - bspw. gemahlenem Kaffee - gefüllt ist. Das zweite Brühmodulteil 4 ist eingerichtet, eine Flüssigkeit - bspw. heisses Wasser - durch die Perforationselemente oder an diesen vorbei in die angestochene Portionskapsel 10 einzubringen wobei das Wasser über eine Wasserzuführung 12 zuführbar ist, die bspw. einen flexiblen Schlauch aufweisen kann.

Auch das erste Brühmodulteil 3 weist im hier beschriebenen Ausführungsbeispiel Perforationselemente auf, nämlich extraktionsseitige Anstechspitzen 39. Diese können beispielsweise ausgebildet sein wie in der Patentanmeldung PCT/CH2014/000134 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Ausserdem weist das erste Brühmodulteil 3 beidseits der Portionskapsel 10 zum zweiten Brühmodulteil 4 hin ragende Führungsmittel 31 auf, wie sie beispielsweise in der Anmeldung PCT/CH2014/000138 beschrieben sind, auf deren Inhalt hier betreffend die Funktionsweise dieser Führungsmittel 31 sowie von entsprechenden Rückholmitteln des zweiten Brühmodulteils 4 ausdrücklich Bezug genommen wird.

Für die Zubereitung eines Brühgetränks wird wie an sich bekannt eine Portionskapsel 10 zwischen dem ersten Brühmodulteil 3 und dem zweiten Brühmodulteil 4 platziert, und diese werden so aufeinander zubewegt, dass zwischen diesen eine die Portionskapsel 10 umfassende Brühkammer gebildet wird. Das heisse Wasser wird durch das zweite Brühmodulteil 4 unter Druck der Portionskapsel 10 zugeführt, und das Extraktionsprodukt fliesst durch das erste Brühmodulteil 3 via einen Getränkeauslauf 13 in ein bspw. darunter platziertes Trinkgefäss ab.

Die relative Bewegung des zweiten Brühmodulteils 4 zum ersten Brühmodulteil 3 wird im hier beschriebenen Ausführungsbeispiel dadurch erreicht, dass das erste Brühmodulteil 3 gehäusefest montiert ist, während das zweite Brühmodulteil 4 entlang der horizontalen Achse bewegbar ist. Der Antrieb des zweiten Brühmodulteils 4 erfolgt über einen motorisiert angetriebenen Kniehebel. Eine mit einem Elektromotor (in den Figuren 1 und 2 nicht sichtbar, bspw. durch ein Antriebsgehäuse 25 abgedeckt) in Verbindung stehende Ritzelwelle 24 treibt eine verzahnte Antriebsscheibe 20 an, die drehfest mit einem ersten Kniehebelarm 21 verbunden ist, so dass eine Schwenkbewegung der Antriebsscheibe 20 um ihre Achse 26 den ersten Kniehebelarm 21 ebenfalls um diese Achse 26 schwenkt. Ein zweiter Kniehebelarm 22 ist an einer Seite über einen Kniehebelbolzen 23 mit dem ersten Kniehebelarm 21 verbunden und wirkt an der anderen Seite mit einem Führungszapfen 41 des zweiten Brühmodulteils 4 zusammen. Da das zweite Brühmodulteil 4 durch das Gehäuse 2 so gelagert ist, dass er nur linear entlang der im Wesentlichen horizontalen Achse verschiebbar ist, bewirkt eine Schwenkbewegung von Antriebsscheibe 20 und erstem Kniehebelarm 21 daher ein Strecken bzw. Knicken des vom Kniehebel gebildeten Kniegelenks und dadurch eine lineare Verschiebung des zweiten Brühmodulteils 4.

Oberhalb der Brühkammereinheit mit erstem Brühmodulteil 3 und zweitem Brühmodulteil 4 ist ein Kapselerkennungsmodul 5 mit einem Kamerasensor 51, einer Linse 59, einem Diffusor 53, einem Diffusorfenster 54 , einem Diffusorfensterhalter 55, einem Kapselerkennungsfenster 52, einer Lichtquelle 62 sowie einem über einen Lüftungseinlass zugeschalteter Lüfter 70 angebracht. Ein solches Kapselerkennungsmodul 5 ist beispielsweise in der Anmeldung EP 14195680 beschrieben, auf deren Inhalt hier betreffend die Funktionsweise dieses Kapselerkennungsmoduls 5 ausdrücklich Bezug genommen wird.

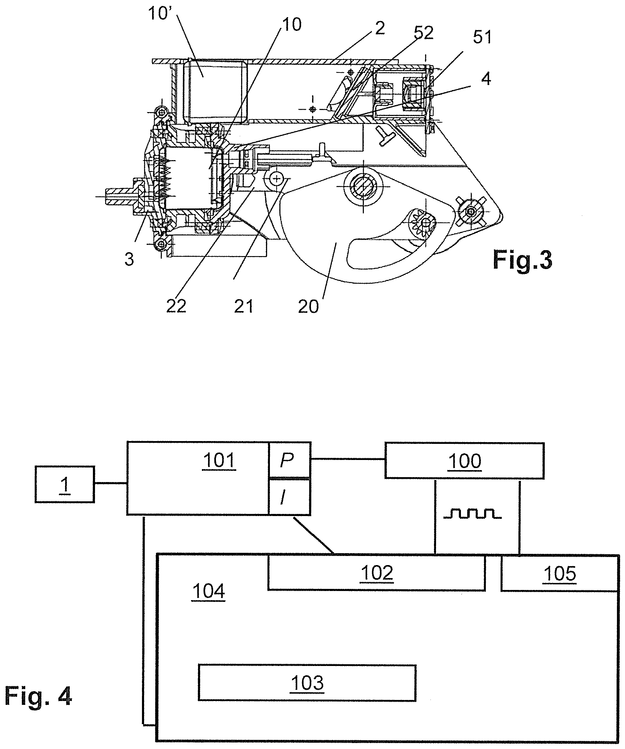

**Figur 3** zeigt eine neben der offenen Position weitere für den Brühvorgang charakteristische Position des zweiten Brühmodulteils 4. Es handelt es sich dabei um die geschlossene Position, in welcher die beiden Brühmodulteile eine Brühkammer bilden, welche eine sich in der Brühposition befindende Portionskapsel 10 beim Brühvorgang mindestens teilweise umgibt. In Figur 3 ist ferner eine zweite Portionskapsel 10' gezeigt, welche durch die Position des zweiten Brühmodulteils 4 nicht in das Brühmodul gelangen kann, sondern im Kapselerkennungsmodul 5 gehalten wird.

**Figur 4** zeigt schematisch, wie eine Getränkezubereitungsmaschine, welches ein Brühmodul 1 mit automatisiertem Schliessen der Brühkammer umfasst, wie beispielsweise in den Figuren 1-3 gezeigt, zusätzlich gegen eine Fehlfunktion, welche zu einer Gefährdung des Benutzers oder der Getränkezubereitungsmaschine führen könnte, absicherbar ist. Die Getränkezubereitungsmaschine weist einen Impulsgeber 100 auf, welcher nach einem bestimmten Vortrieb P (einem Schritt) des elektrischen Antriebs 101 ein Signal als Triggersignal an eine Messvorrichtung 102 einer Steuerung 104 übermittelt. Der Impulsgeber kann Teil eines auf einem Schrittmotor basierenden elektrischen Antriebs oder ein Drehgeber sein. Beispielsweise kann der elektrische Antrieb 101 ein DC-Motor sein, an dem ein Hall-Sensor als Impulsgeber angeschlossen ist, welcher die Umdrehungen des Motors ausgibt.

Bei jeder Signaländerung liest die Messvorrichtung 102 die aktuelle Stromaufnahme *I* des elektrischen Antriebs 101 aus. Die Steuerung vergleicht den ausgelesenen Wert mit einem ersten Vergleichswert 103. Sollte die gemessene Stromaufnahme *I* den ersten Vergleichswert 103 überschreiten, die eine Steuerung 104 den elektrischen Antrieb 101 bzw. den Impulsgeber 100 an, sofort zu stoppen.

In der gezeigten Ausführungsform ist das durch den Impulsgeber 100 pro Schritt übermittelte Signal ein einzelner Puls. Um daraus eine Positionsangabe abzuleiten, weist die Steuerung 104 einen Zähler 105 auf, welcher die Anzahl Pulse zwischen dem Verlassen des zweiten Brühmodulteils aus der offenen Position und dem Überschreiten des ersten Vergleichswertes 103 durch die gemessene Stromaufnahme *I* aufsummiert. Aus der daraus resultierenden Summe an Impulsen lässt sich auf einfache Weise feststellen, ob der erste Vergleichswert 103 deshalb überschritten wurde, weil das zweite Brühmodulteil 4 gegen das erste Brühmodulteil 3 drückt oder ob sich das zweite Brühmodulteil 4 noch nicht in direktem Kontakt mit dem ersten Brühmodulteil 4 befindet. Im ersten Fall ist die Brühkammer korrekt geschlossen und der Brühvorgang kann ohne Verzögerung fortgesetzt werden. Im zweiten Fall liegt eine Fehlfunktion vor und die Getränkezubereitungsmaschine unterbricht automatisch den Brühvorgang.

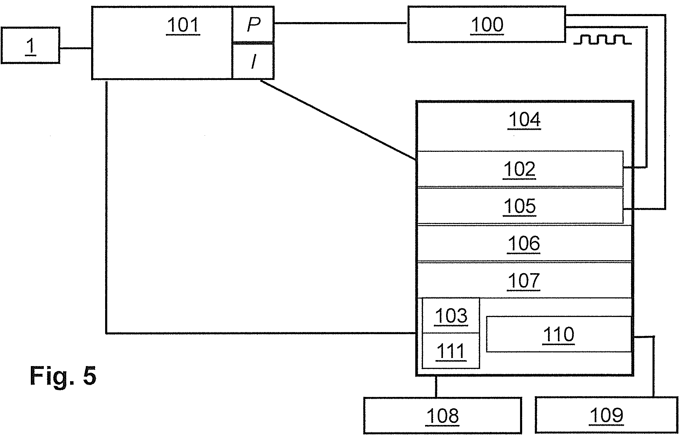

In **Figur 5** ist die Absicherung der Getränkezubereitungsmaschine gemäss Figur 4 um Elemente erweitert, welche zu einer Fehlererkennung, sowie einer Fehlerbehebung führen. Ferner sind diese Elemente dahingehend ausgelegt, dass auch Ereignisse im Brühvorgang, welche nicht ein sofortiges Stoppen des elektrischen Antriebs nach sich ziehen müssen, festgestellt werden können.

Die Getränkezubereitungsmaschine weist dazu einen Datenspeicher 106 auf. Der Datenspeicher 106 ist auf zwei verschiedene Arten zur Registrierung von Fehlern und Ereignissen einsetzbar. In einer ersten Einsatzart vergleicht die Messvorrichtung 102 die bei jeder Signaländerung ausgelesene Stromaufnahme *I* des elektrischen Antriebs 101 mit einem zweiten Vergleichswert 111. Falls der Vergleich ein Ereignis vermuten lässt, veranlasst die Messvorrichtung 102 die Übermittlung des Zählerstandes an den Datenspeicher 106 und übermittelt gegebenenfalls selbst die gemessene Stromaufnahme an den Datenspeicher 106. Eine in die Steuerung 104 integrierte Auswerteroutine 107 ordnet dann den abgespeicherten Werten konkrete Ereignisse, wie beispielsweise das Anstechen der Portionskapsel 10, zu und gibt eine Warnung aus, falls nicht zuordenbare abgespeicherte Werte vorhanden sind oder falls Werte vorhanden sind, welche charakteristisch für eine sich abzeichnende Fehlfunktion sind. Letzteres kann beispielsweise durch Verschmutzung ausgelöst werden.

In einer zweiten Einsatzart des Datenspeichers 106 wird jede durch die Messvorrichtung 102 ausgelesene Stromaufnahme des elektrischen Antriebs 101 mit dem bei der Auslese gültigen Zählerstand verknüpft und abgespeichert. Es wird also eine Kurve generiert und gespeichert, welche die Stromaufnahme in Abhängigkeit des Zählerstandes wiedergibt. Die Auswerteroutine 107 analysiert dann die gespeicherte Kurve. Insbesondere kann eine Analyse basierend auf Maxima und den dazugehörigen Zählerstände analog zur ersten Einsatzart durchgeführt werden.

In der gezeigten Ausführungsform sind sowohl Datenspeicher 106 als auch Auswerteroutine 107, als auch der zuvor genannte Zähler 105 und die zuvor genannte Messvorrichtung 102 in die Steuerung 104 integriert, welche als eine zentrale Steuerungseinheit der Getränkezubereitungsmaschine ausgelegt ist.

Ferner sind an die Steuerung 104 Sensoren 108 angeschlossen, welche beispielsweise zur Überwachung von Füllständen und Temperaturen sowie der Position von Bauteilen wie einem Verschluss oder eines Kapselbehälters dienen. Des weiteren ist die Steuerung 104 mit einem Display 109 verbunden, über welches die Getränkezubereitungsmaschine mit dem Benutzer kommunizieren kann, beispielsweise wenn es darum geht, eine Auswahl zu treffen oder um den Benutzer mit Blick auf eine Fehlerbehebung zu instruieren.

Die über das Display 109 stattfindende Interaktion mit dem Benutzer findet im Rahmen eines oder mehrerer Programme 110 statt, welche ebenfalls in der Steuerung 104 der Getränkezubereitungsmaschine abgelegt sind.

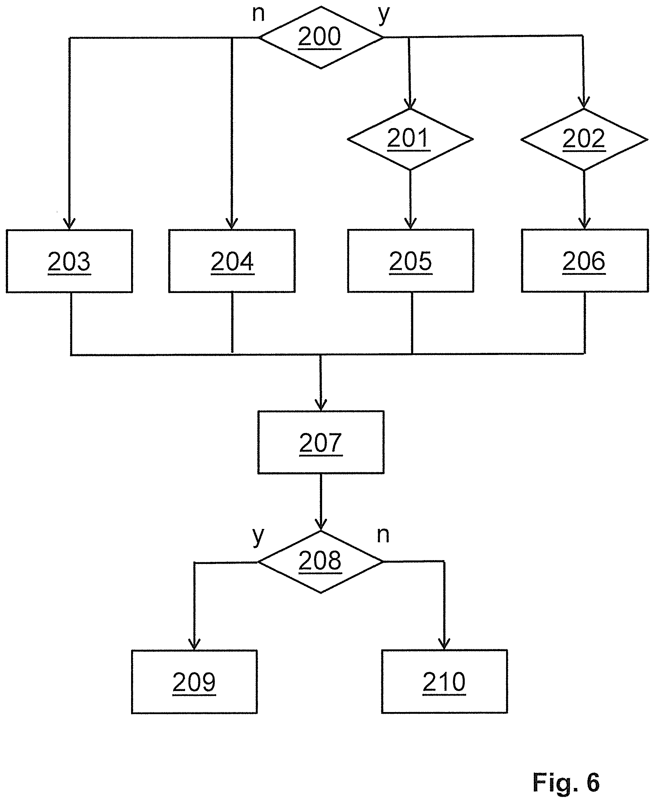

**Figur 6** zeigt schematisch ein Verfahren zum Betreiben einer Getränkezubereitungsmaschine. Das Verfahren läuft im Rahmen eines in der Steuerung 104 abgespeicherten Programms ab. In der Ausführungsform der Getränkezubereitungsmaschine, welche dem Verfahren gemäss Figur 6 entspricht, weist diese ein einen Kamerasensor 51 umfassendes Kapselerkennungsmodul 5 auf, wie beispielsweise in Figur 1 gezeigt.

Das gezeigte Verfahren zum Betreiben einer Getränkezubereitungsmaschine weist folgende Schritte auf:
- Erkennen 200 einer über die Kapseleinlegeöffnung 11 eingebrachten Portionskapsel 10 durch das Kapselerkennungsmodul 5;
- Falls eine Portionskapsel 10 erkannt wurde, Feststellen 201 ob es sich um eine Portionskapsel für Kaffee handelt oder Identifizierung 202 einer Reinigungskapsel;
- Falls eine Portionskapsel für Kaffee festgestellt wurde, Freischalten 205 einer Möglichkeit, die Kaffeezubereitung durch den Benutzer zu starten. Das Freischalten 205 kann eine Auswahl zwischen verschiedenen Zubereitungsprozessen, beispielsweise für Espresso oder Cappuccino, umfassen;
- Falls eine Reinigungskapsel identifiziert wurde, Aktivierung 206 eines Bedienelements, welches es dem Benutzer erlaubt, den Reinigungsprozess zu starten;
- Falls keine Portionskapsel 10 durch das Kapselerkennungsmodul erkannt wurde, Freischalten 203 der Möglichkeit, Trinkgefässe vorzuwärmen und/oder Aktivierung 204 eines Bedienelements, über welches der Benutzer einen Prozess zum Entkalken der Getränkezubereitungsmaschine starten kann;
- Kontrolliertes Schliessen 207 der Brühkammer, bevor ein durch den Benutzer initiierter Prozess, insbesondere ein Prozess zur Kaffeezubereitung, ein Reinigungsprozess oder ein Entkalkungsprozess, startet. Das kontrollierte Schliessen 207 umfasst insbesondere das Aufsummieren der Anzahl Impulse zwischen dem Verlassen der offenen Position durch das zweite Brühmodulteil 4 und dem Überschreiten des ersten Vergleichswertes 103;
- Abgleich 208 der gezählten Anzahl Impulse mit einem Wertebereich, welcher die Sollwerte für ein korrektes Schliessen der Brühkammer umfasst;
- Beginnen 209 des durch den Benutzer ausgewählten Prozesses, falls die gezählte Anzahl Impulse zeigt, dass die Brühkammer korrekt geschlossen hat;
- Ausgabe einer Fehlermeldung und Starten 210 einer Initialisierungsroutine 300 zur Behebung eines Fehlers, falls die gezählte Anzahl Impulse zeigt, dass die Brühkammer nicht korrekt geschlossen hat.

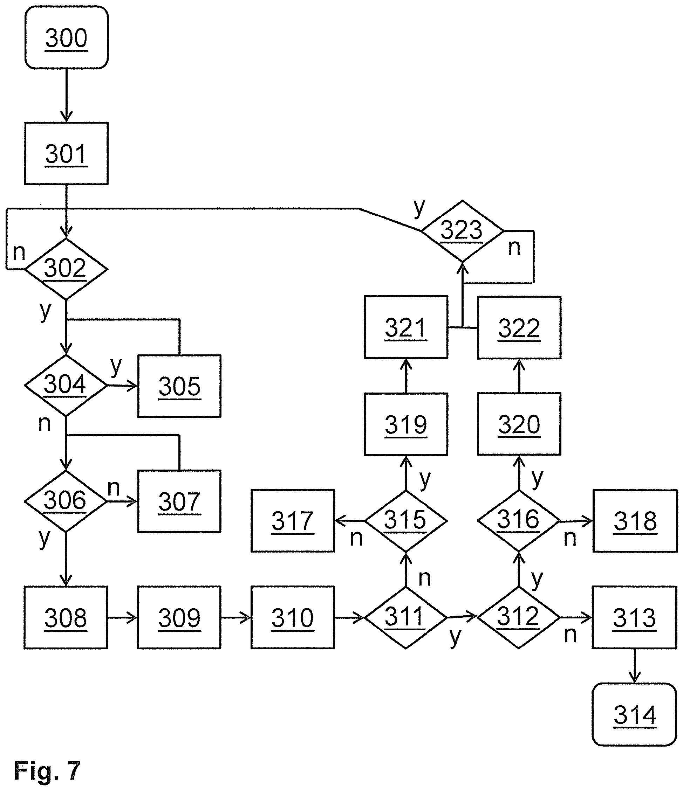

**Figur 7** zeigt schematisch eine Initialisierungsroutine 300 zur Behebung eines Fehlers, welcher beim Schliessen der Brühkammer aufgetreten ist. Diese oder ähnliche Routinen können auch beim Auftreten eines Fehlers bei anderen Positionswechseln des zweiten Brühmodulteils 4, insbesondere beim Anfahren der Park-Position, sowie beim erstmaligen Aufstarten der Maschine gestartet werden.

Zu Beginn der Initialisierungsroutine 300 wird der Benutzer zum Leeren 301 des Kapselbehälters, in welchem gebrauchte Portionskapseln 10 gesammelt werden, aufgefordert. In demselben Schritt wird der Benutzer ferner aufgefordert, seine im Vorfeld des Brühvorgangs, beziehungsweise im Vorfeld der Initialisierungsroutine 300, vorgenommenen Handlungen zu überprüfen.

Anschliessend überprüft die Getränkezubereitungsmaschine, ob sie in einem für eine nachfolgende Fehlerbehebung geeigneten Zustand ist. Dazu führt die Getränkezubereitungsmaschine folgende Schritte aus:
- Überprüfung 302, ob der Kapselbehälter eingesetzt, beziehungsweise richtig positioniert ist. Ist dies nicht der Fall, wartet die Initialisierungsroutine 300 ab, bis in einer Verifizierung 323 festgestellt wurde, dass der Verschluss geöffnet und wieder geschlossen wurde, bevor eine neuerliche Überprüfung, ob der Kapselbehälter eingesetzt, beziehungsweise richtig positioniert ist, stattfindet;

- Verifizierung 304, dass sich keine Portionskapsel 10 im Kapselerkennungsmodul 5 befindet. Befindet sich eine Portionskapsel 10 im Kapselerkennungsmodul 5, fordert die Getränkezubereitungsmaschine den Benutzer zur Entfernung 305 der Portionskapsel 10 aus dem Kapselerkennungsmodul 5 auf;
- Abfrage 306, ob der Verschluss geschlossen ist. Falls der Verschluss nicht geschlossen ist, fordert die Getränkezubereitungsmaschine den Benutzer zum Schliessen 307 des Verschlusses auf.

Als nächste Schritte innerhalb der Initialisierungsroutine 300 folgen das Anfahren 308 der offenen Position gefolgt vom Null-Setzen 309 des Zählers 105. Durch das Anfahren der offenen Position besteht ferner die Möglichkeit, dass eine falsch positionierte Portionskapsel 10 gegebenenfalls von selbst aus dem Brühmodul 1 in den Kapselbehälter fällt.

Es folgt ein Anfahren 310 der geschlossenen Position. Sobald die Stoppbedingung erfüllt ist, findet ein Abgleich 311 der seit Verlassen der offenen Position bis zum Erfüllen der Stoppbedingung gezählten Anzahl Impulse statt. Ist die Anzahl gezählter Impulse in einem Bereich, der auf ein korrektes Schliessen der Brühkammer schliessen lässt, folgt eine Überprüfung 312, ob unerwartete Spitzen in der Stromaufnahme während des Übergangs von der offenen in die geschlossene Position aufgetreten sind. Die Überprüfung 312 unerwarteter Spitzen erfolgt über ein Abgleich der während des Anfahrens 310 der geschlossenen Position gemessenen Stromaufnahme mit dem zweiten Vergleichswert 111. Sind keine unerwarteten Spitzen in der Stromaufnahme aufgetreten, folgt ein Anfahren 313 der Parkposition, wodurch die Getränkezubereitungsmaschine wieder bereit ist für das Einlegen einer Portionskapsel 10 in das Kapselerkennungsmodul 5, und das Beenden 314 der Initialisierungsroutine 300.

In Fällen, in welchen der Abgleich 311 der gezählten Impulse auf ein nicht vollständiges Schliessen der Brühkammer oder in welchen die Überprüfung 312 unerwarteter Spitzen in der Stromaufnahme ebensolche ergeben hat, wird über eine Abfrage 315, ob die Fehlfunktion des unvollständigen Schliessens der Brühkammer, beziehungsweise über eine Abfrage 316, ob eine aus der Stromaufnahme feststellbare Unregelmässigkeit vorliegt, festgestellt, ob eine solche Fehlfunktion beziehungsweise Unregelmässigkeit zum ersten Mal innerhalb der laufenden Initialisierungsroutine 300 stattgefunden hat. Falls eine Abfrage 315, 316 ergibt, dass es nicht das erste Mal war, ergeht eine Aufforderung 317, 318 an den Benutzer, den Gerätehersteller oder eine Hotline zu kontaktieren.

Ergibt hingegen die Abfrage 315 nach erstmaligem Auftreten eines nicht vollständigen Schliessens der Brühkammer, dass eine solche Fehlfunktion innerhalb der Initialisierungsroutine 300 zum ersten Mal aufgetreten ist, so folgt ein neuerliches Anfahren 319 der offenen Position gefolgt von einer Aufforderung 321 an den Benutzer, die Kapseleinlegeöffnung auf blockierende Elemente hin zu überprüfen.

Ergibt andererseits die Abfrage 316 nach erstmaligem Auftreten von unerwarteten Spitzen in der Stromaufnahme, dass eine solche Unregelmässigkeit innerhalb der Initialisierungsroutine 300 zum ersten Mal aufgetreten ist, so folgt ein Anfahren 320 einer Service-Position gefolgt von einer Aufforderung 322 an den Benutzer zu überprüfen, ob sich eine Portionskapsel 10 in der Brühkammer befindet und diese gegebenenfalls zu entfernen.

Um festzustellen, ob der Benutzer der Aufforderung 321 zur Überprüfung der Kapseleinlegeöffnung beziehungsweise der Aufforderung 322 zur Entfernung der Portionskapsel 10 aus der Brühkammer nachgekommen ist, führt die Getränkezubereitungsmaschine eine Verifizierung 323 durch, in welcher festgestellt wird, ob der Verschluss geöffnet und wieder geschlossen wurde. Sollte dies nicht festgestellt werden, wird der Benutzer nochmals dahingehend aufgefordert.

Sollte hingegen ein Öffnen und Schliessen des Verschlusses festgestellt werden, so wird die Initialisierungsroutine 300 ab dem Schritt der Überprüfung 302, ob der Kapselbehälter eingesetzt, beziehungsweise richtig positioniert ist, wiederholt.

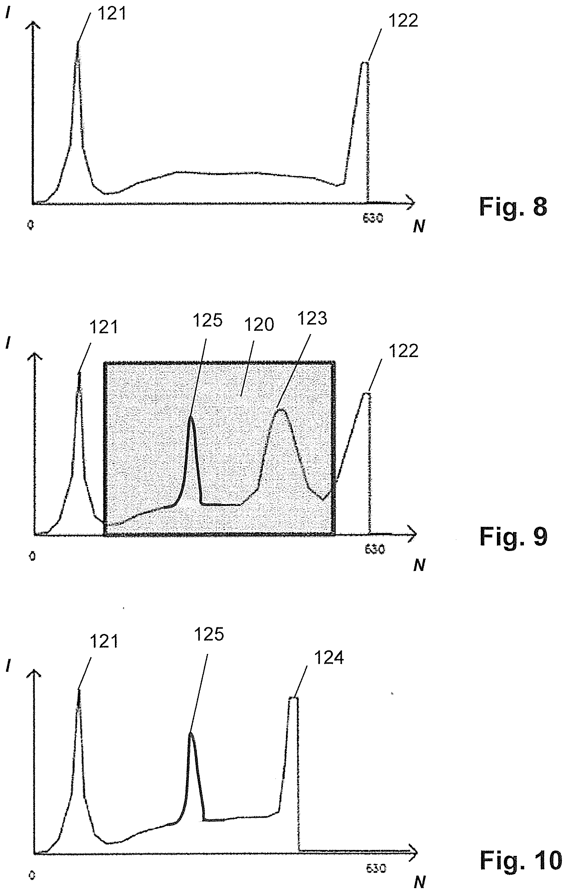

**Figuren 8-10** zeigen schematische Kurven, welche die wesentlichen Merkmale von Messkurven aufzeigen, die im Datenspeicher 106 einer Getränkezubereitungsmaschine, welche gemäss der in Figur 5 gezeigten Funktionsweise funktioniert, abgespeichert werden. Gezeigt ist die Stromaufnahme I des elektrischen Antriebs 101 in Abhängigkeit des Zählerstandes N, d.h. in Abhängigkeit der Anzahl registrierter Impulse und somit in Abhängigkeit der Position des zweiten Brühmodulteils 4 relativ zum ersten Brühmodulteil 3. Startposition (Zählerstand ist null) des zweiten Brühmodulteils 4 ist die offene Position.

In den Figuren 8-10 ist eine erste Stromaufnahme-Spitze 121 sichtbar, welche kurz nach Verlassen der offenen Position auftritt. Diese hat ihren Ursprung im Anfahren des elektrischen Antriebs 101 und dem dadurch bewirkten in Bewegung Versetzen des zweiten Brühmodulteils 4 ("Anfahrstrom").

Bei dem den Figuren 8-10 zu Grunde liegenden Brühmodul 1 ist das zweite Brühmodulteil 4 nach 630 Schritten des elektrischen Antriebs 101 in direktem Kontakt zum ersten Brühmodulteil 3. Die Anzahl Schritte hängt von der Realisierung des elektrischen Antriebs und der Art und Weise, wie das Signal zur Bestimmung einer Positionsänderung generiert wird, ab. Der einsetzende direkte Kontakt führt dazu, dass die Stromaufnahme *I* in der Region um *N* = 630 rasch zunimmt, eine zweite Stromaufnahme-Spitze 122 bildet und letztlich die Stoppbedingung erfüllt.

Um ein nicht fehlerbedingtes Stoppen des elektrischen Antriebs 101 vor der Einnahme der geschlossenen Position zu verhindern, wird die Analyse der Stromaufnahme-Kurve auf einen Auswertebereich 120 beschränkt, welcher nach der durch das Anfahren verursachten erste Stromaufnahme-Spitze 121 beginnt und vor der durch das in Kontakt treten von erstem und zweitem Brühmodulteil verursachten zweiten Stromaufnahme-Spitze 122 endet.

**Figur 8** zeigt schematisch die Stromaufnahme *I* des elektrischen Antriebs 101 in Abhängigkeit des Zählerstandes *N* für den Fall, dass keine Portionskapsel 10 in das Brühmodul 1 eingelegt wurde. In diesem Fall variiert die Stromaufnahme *I* zwischen erster Stromaufnahme-Spitze 121 und zweiter Stromaufnahme-Spitze 122 nur schwach.

In **Figur 9** ist eine Portionskapsel 10 korrekt in das Brühmodul 1 eingelegt. Auch hier variiert die Stromaufnahme nach der ersten Stromaufnahme-Spitze 121 vorerst nur schwach, bevor bei Getränkezubereitungsmaschinen, bei welchen die Portionskapsel 10 unter Verwendung einer Einwurfrille in die Brühposition gelangt, das Fahren der Portionskapsel 10 über die Einwurfrille zu einer dritten Stromaufnahme-Spitze 125 führt. Anschliessend führt das Anstechen der Portionskapsel 10 zu einer neuerlichen Zunahme der Stromaufnahme und einer vierten Stromaufnahme-Spitze 123.

**Figur 10** visualisiert die Stromaufnahme *I* für den Fall einer falsch im Brühmodul 1 positionierten Portionskapsel 10. Je nach Art der Fehlpositionierung der Portionskapsel 10 verkantet diese früher oder später zwischen dem erstem und dem zweitem Brühmodulteil. Dies führt zu einer fünften Stromaufnahmespitze 124, welche letztlich den ersten Vergleichswertes 103 überschreitet und damit zum Stoppen des elektrischen Antriebes 101 führt.

### Bezugszeichenliste:

- 1: Brühmodul
- 2: Gehäuse
- 3: erstes Brühmodulteil
- 4: zweites Brühmodulteil
- 5: Kapselerkennungsmodul
- 10: Portionskapsel
- 10': zweite Portionskapsel
- 11: Kapseleinlegeöffnung
- 12: Wasserzuführung
- 13: Getränkeauslauf
- 20: Antriebsscheibe
- 21: Erster Kniehebelarm
- 22: zweiter Kniehebelarm
- 23: Kniehebelbolzen
- 24: Ritzelwelle
- 25: Antriebsgehäuse
- 26: Achse
- 31: Führungsmittel
- 39: extraktionsseitige Anstechspitzen
- 41: Führungszapfen
- 51: Kamerasensor
- 52: Kapselerkennungsfenster
- 53: Diffusor
- 54: Diffusorfenster
- 55: Diffusorfensterhalter
- 59: Linse
- 62: Lichtquelle
- 70: Lüfter
- 100: Impulsgeber
- 101: elektrischer Antrieb
- 102: Messvorrichtung
- 103: erster Vergleichswert
- 104: Steuerung
- 105: Zähler
- 106: Datenspeicher
- 107: Auswerteroutine
- 108: Sensor(en)
- 109: Display
- 110: Programm(e)
- 111: zweiter Vergleichswert
- 120: Auswertebereich
- 121: erste Stromaufnahme-Spitze
- 122: zweite Stromaufnahme-Spitze
- 123: vierte Stromaufnahme-Spitze
- 124: fünfte Stromaufnahme-Spitze
- 125: dritte Stromaufnahme-Spitze
- 200: Erkennen einer Portionskapsel
- 201: Feststellen ob Portionskapsel für Kaffee
- 202: Identifizierung ob Reinigungskapsel
- 203: Freischalten eines Prozesses zum Vorwärmen des Trinkgefässes
- 204: Aktivierung eines Bedienelements zum Starten eines Entkalkungs-Prozesses
- 205: Freischalten eines Bedienelements zum Starten eines Getränkezubereitungs-Prozesses
- 206: Aktivierung eines Bedienelements zum Starten eines Reinigungsprozesses
- 207: Kontrolliertes Schliessen der Brühkammer
- 208: Abgleich der Anzahl Impulse
- 209: Beginnen eines Prozesses
- 210: Ausgabe Fehlermeldung/Starten Initialisierungsprozess
- 300: Initialisierungsroutine
- 301: Leeren des Kapselbehälters
- 302: Überprüfung ob Kapselbehälter eingesetzt/richtig positioniert
- 304: Verifizierung ob Kapselbehälter leer
- 305: Entfernen der Portionskapsel aus Kapselerkennungsmodul
- 306: Abfrage Verschluss-Position
- 307: Schliessen des Verschlusses
- 308: Anfahren der offenen Position
- 309: Null-Setzen des Zählers
- 310: Anfahren der geschlossenen Position
- 311: Abgleich der Anzahl Impulse
- 312: Überprüfung nach unerwarteten Spitzen
- 313: Anfahren der Parkposition
- 314: Beenden der Initialisierungsroutine
- 315: Abfrage nach wiederholtem Auftreten der Fehlfunktion
- 316: Abfrage nach wiederholtem Auftreten der Unregelmässigkeit
- 317: Aufforderung zur Kontaktaufnahme
- 318: Aufforderung zur Kontaktaufnahme
- 319: Anfahren der offenen Position
- 320: Anfahren der Service-Position
- 321: Aufforderung zur Überprüfung nach blockierenden Elementen
- 322: Aufforderung zum Entfernen der Portionskapsel aus der Brühkammer
- 323: Verifizierung einer Betätigung des Verschlusses

## Patentansprüche

1. Getränkezubereitungsmaschine zum Zubereiten eines Getränks aus einer Portionskapsel (10), aufweisend
- ein Gehäuse (2), welches eine Kapseleinlegeöffnung (11) aufweist, durch welche die Portionskapsel (10) eingelegt werden kann;
- ein Brühmodul (1) aufweisend ein erstes Brühmodulteil (3) und ein relativ zu diesem bewegbares zweites Brühmodulteil (4), wobei durch das erste und zweite Brühmodulteil eine Brühkammer bildbar ist, welche die sich in einer Brühposition befindende Portionskapsel (10) beim Brühvorgang mindestens teilweise umgibt, wobei das Brühmodul (1) eingerichtet ist, durch das Einleiten einer Brühflüssigkeit in die Portionskapsel (10) ein Brühgetränk zu brühen und dieses aus der Portionskapsel (10) abzuleiten;
und ferner aufweisend einen elektrischen Antrieb (101) für eine Bewegung des zweiten Brühmodulteils (4) relativ zum ersten Brühmodulteil (3) sowie eine Steuerung (104) zum Steuern des elektrischen Antriebs (101),
**dadurch gekennzeichnet, dass** die Steuerung (104) eingerichtet ist, eine jederzeit aktuelle Position des zweiten Brühmodulteils (4) relativ zum ersten Brühmodulteil (3) zu bestimmen.

2. Getränkezubereitungsmaschine nach Anspruch 1, wobei die Steuerung (104) eingerichtet ist, eine Anzahl von Schritten zu zählen, um welche der elektrische Antrieb (101) das zweite Brühmodulteil (4) relativ zum ersten bewegt hat und aus der gezählten Anzahl von Schritten die aktuelle relative Position zu bestimmen.

3. Getränkezubereitungsmaschine nach Anspruch 2, wobei die Schritte als Dreh-Impulse oder Schrittmotor-Impulse gezählt werden.

4. Getränkezubereitungsmaschine nach einem der vorangehenden Ansprüche, wobei die Steuerung (104) eine Messvorrichtung (102) zur Überwachung eines Parameters aufweist, welcher die vom elektrischen Antrieb (101) aufgenommene elektrische Leistung charakterisiert.

5. Getränkezubereitungsmaschine nach Anspruch 4, wobei die Steuerung (104) eingerichtet ist, den gemessenen Parameter mit einem ersten Vergleichswert (103) zu vergleichen, um festzustellen, ob eine Stoppbedingung erfüllt ist, wobei die Steuerung (104) den elektrischen Antrieb (101) im Falle einer erfüllten Stoppbedingung stoppt.

6. Getränkezubereitungsmaschine nach Anspruch 5, wobei die Steuerung (104) eingerichtet ist, anhand der bestimmten Position festzustellen, ob die Stoppbedingung an einer für einen Brühvorgang charakteristischen Position des zweiten Brühmodulteils (4) erfüllt wurde oder ob das Erfüllen der Stoppbedingung durch eine Fehlfunktion der Getränkezubereitungsmaschine verursacht wurde.

7. Getränkezubereitungsmaschine nach einem der Ansprüche 5 oder 6, wobei die Getränkezubereitungsmaschine eingerichtet ist, nach einem durch das Erfüllen der Stoppbedingung verursachten Stoppen des elektrischen Antriebs (101) mindestens einen der folgenden Schritte durchzuführen:
- den Benutzer über zu unternehmende Handlungen zu informieren;
- den Füllstand und/oder die Position von einem oder mehreren vom zweiten Brühmodulteil (4) und dessen Antrieb unterschiedlichen Bauteilen der Getränkezubereitungsmaschine zu bestimmen;
- eine Initialisierungsroutine (300) zu starten, innerhalb welcher verschiedene charakteristische Positionen des zweites Brühmodulteils (4) gemäss Initialisierungsroutine (300) angefahren werden;
- festzustellen, ob beim Anfahren der verschiedenen charakteristische Positionen gemäss Initialisierungsroutine (300) eine Fehlfunktion oder ein Ereignis, auf welche nicht mit einem sofortigen Stoppen des elektrischen Antriebs (101) zu reagieren ist, auftritt und ob diese Fehlfunktion oder dieses Ereignis zweimal hintereinander auftritt, ohne dass die Getränkezubereitungsmaschine (1) zwischen diesen beiden Auftreten die Initialisierungsroutine (300), durch welche die verschiedenen charakteristischen Positionen des zweites Brühmodulteils (4) angefahren werden, verlassen hat;
um wieder in den Normalbetrieb überzugehen.

8. Getränkezubereitungsmaschine nach einem der Ansprüche 4-7, wobei die Steuerung (104) eingerichtet ist, den gemessenen Parameter des elektrischen Antriebs (101) mit einem zweiten Vergleichswert (111) zu vergleichen, wobei der zweite Vergleichswert (111) betragsmässig kleiner als der erste Vergleichswert (103) ist, und wobei die Steuerung (104) dahingehend ausgelegt ist, ein Warnsignal zu generieren, falls der gemessene Parameter grösser als der zweite Vergleichswert (111) aber kleiner als der erste Vergleichswert (103) ist, um Ereignisse im Betrieb der Getränkezubereitungsmaschine festzustellen, auf welche nicht mit einem sofortigen Stoppen des elektrischen Antriebs (101) zu reagieren ist.

9. Getränkezubereitungsmaschine nach einem der Ansprüche 4-8, ferner aufweisend einen Datenspeicher (106), in welchem zu jeder relativen Position des zweiten Brühmodulteils (4) zum ersten Brühmodulteil (3) der zu dieser Position gemessene Parameter abspeicherbar ist, um eine Messkurve des gemessenen Parameters des elektrischen Antriebs (101) in Abhängigkeit der relativen Position des zweiten Brühmodulteils (4) zu generieren.

10. Getränkezubereitungsmaschine nach Anspruch 9, wobei die Steuerung (104) eingerichtet ist, in einem Auswertebereich (120) der relativen Positionen Maxima des gemessenen Parameters, welche über dem zweiten Vergleichswert (111) aber unter dem ersten Vergleichswert (103) sind, sowie die relative Position des Auftretens eines jeden Maximum festzustellen, um besagte Ereignisse festzuhalten.

11. Getränkezubereitungsmaschine nach einem der vorangehenden Ansprüche, aufweisend einen Drehgeber, welcher nach jeder Positionsänderung des zweiten Brühmodulteils (4) relativ zum ersten Brühmodulteil (3) um einen Schritt ein Signal an die Steuerung übermittelt, welches als Schritt gezählt wird, um daraus die aktuelle relative Position des zweiten Brühmodulteils (4) zu bestimmen.

12. Getränkezubereitungsmaschine nach einem der vorangehenden Ansprüche, ferner aufweisend ein Kapselerkennungsmodul (5), das eingerichtet ist, basierend auf einer optischen Eigenschaft der Portionskapsel (10) zu erkennen, ob eine solche in die Getränkezubereitungsmaschine eingebracht ist und um welchen Portionskapseltyp es sich handelt, wobei das Kapselerkennungsmodul (5) dem Brühmodul (1) vorgelagert angeordnet ist und wobei ein Transfer der Portionskapsel (10) vom Kapselerkennungsmodul (5) in das Brühmodul durch die Position des zweiten Brühmodulteils (4) steuerbar ist.

13. Verfahren zum Betreiben einer Getränkezubereitungsmaschine gemäss einem der vorangehenden Ansprüche, **gekennzeichnet durch** folgende Schritte:
- Feststellen, ob das zweite Brühmodulteil (4) eine oder mehrere während des Verfahrens anzufahrende Position korrekt anfährt;
- Stoppen des elektrischen Antriebes (101) und Starten einer Initialisierungsroutine (300) zur Rückversetzung der Getränkezubereitungsmaschine in den Normalbetrieb, falls eine Position nicht korrekt angefahren wurde.

14. Verfahren gemäss Anspruch 13, ferner aufweisend die Schritte
- Erkennung, ob eine Portionskapsel (10) in die Kapseleinlegeöffnung (11) eingelegt wurde;
- Erkennung des Typs der eingelegten Portionskapsel (10);
- Einschränkung der durch einen Benutzer auswählbaren Betriebsarten, welche durch die Getränkezubereitungsmaschine einnehmbar sind, in Abhängigkeit davon, ob eine Portionskapsel (10) erkennt wurde und/oder in Abhängigkeit des erkannten Portionskapsel-Typs.

15. Verfahren gemäss Anspruch 13 oder 14, wobei die Initialisierungsroutine (300) mindestens einen der folgenden Schritte aufweist:
- Bestimmen des Füllstandes und/oder der Position von einem oder mehreren vom zweiten Brühmodulteil (4) und dessen Antrieb unterschiedlichen Bauteilen der Getränkezubereitungsmaschine;
- Informieren des Benutzers über eine oder mehrere vorzunehmende Handlungen;
- Feststellen, ob der Benutzer eine der Handlungen vorgenommen hat;
- Anfahren verschiedener Positionen des zweiten Brühmodulteils (4);
- Feststellen, ob die verschiedenen Positionen korrekt anfahrbar sind;
- Feststellen, ob Ereignisse, auf welche nicht mit einem sofortigen Stoppen des elektrischen Antriebs (101) zu reagieren ist, auftreten;
- Beenden der Initialisierungsroutine (300) und Rückkehr der Getränkezubereitungsmaschine in den Normalbetrieb, falls die verschiedenen Positionen korrekt anfahrbar und keine besagten Ereignisse feststellbar sind;
- Feststellen, ob eine Position innerhalb der Initialisierungsroutine (300) zum ersten Mal nicht korrekt angefahren wurde.

## Claims

1. A drinks preparation machine for the preparation of a drink from a portion capsule (10), comprising
- a housing (2) which comprises a capsule insert opening (11), through which the portion capsule (10) can be inserted;
- a brewing module (10) comprising a first brewing module part (3) and a second brewing module part (4) which is movable relative to the first brewing module part (3), wherein a brewing chamber can be formed by the first and the second brewing module part, wherein said brewing chamber, during a brewing procedure, at least partly surrounds the portion capsule (10) located in a brewing position, and wherein the brewing module (1) is configured to brew a brewed drink by introducing a brewing fluid into the portion capsule (10) and to discharge the brewed drink from the portion capsule (10);
and further comprising an electrical drive (101) for a movement of the second brewing module part (4) relative to the first brewing module part (3), as well as a control (104) for controlling the electrical drive (101);
**characterised in that** the control (104) is configured to determine an always current position of the second brewing module part (4) relative to the first brewing module part (3).

2. A drinks preparation machine according to claim 1, wherein the control (104) is configured to count a number of steps, by which the electrical drive (101) has moved the second brewing module part (4) relative to the first and to determine the current relative position from the counted number of steps.

3. A drinks preparation machine according to claim 2, wherein the steps are counted as rotation pulses or stepper motor pulses.

4. A drinks preparation machine according to one of the preceding claims, wherein the control (104) comprises a measuring device (102) for monitoring a parameter characterising the electrical power which is taken up by the electrical drive (101).

5. A drinks preparation machine according to claim 4, wherein the control (104) is configured to compare the measured parameter with a first comparative value (103), in order to determine whether a stop condition is fulfilled, wherein the control (104) stops the electrical drive (101) in the case of a fulfilled stop condition.

6. A drinks preparation machine according to claim 5, wherein the control (104) is configured to determine, on the basis of the determined position, whether the stop condition has been fulfilled at a position of the second brewing module part (4) which is characteristic of a brewing procedure or whether the fulfilling of the stop condition was caused by a malfunction of the drinks preparation machine.

7. A drinks preparation machine according to one of the claims 5 or 6, wherein the drinks preparation machine is configured, after a stopping of the electric drive (101) which is caused by the fulfilling of the stop condition, to carry out at least one of the following steps:
- informing the user about actions to be undertaken;
- determining the filling level and/or the position of one or more components of the drinks preparation machine which are different from the second brewing module part (4) and its drive;
- starting an initialisation routine (300), within which different characteristic positions of the second brewing module part (4) are moved to according to the initialisation routine (300);
- determining as to whether, on moving to the different characteristic positions according to an initialisation routine (300), a malfunction or an event occurs, to which one is not to react with an immediate stopping of the electric drive (101), and whether this malfunction or this event occurs twice successively without the drinks preparation machine (1) having left the initialisation routine (300) between these two occurrences due to which the different characteristic positions of the second brewing module (4) are moved to;
so as to go into normal operation again.

8. A drinks preparation machine according to one of the claims 4-7, wherein the control (104) is configured to compare the measured parameter of the electrical drive (101) with a second comparative value (111), wherein regarding their respective absolute values, the second comparative value (111) is smaller than the first comparative value (103), and wherein the control (104) is designed such as to generate a warning signal if the measured parameter is larger than the second comparative value (111) but smaller than the first comparative value (103), in order to determine events during operation of the drinks preparation machine, to which one is not to react with an immediate stopping of the electrical drive (101).

9. A drinks preparation machine according to one of the claims 4-8, further comprising a data memory (106), in which, for each relative position of the second brewing module part (4) to the first brewing module part (3), the parameter measured for this position can be stored, in order to generate a measuring curve of the measured parameter of the electrical drive (101) in dependence of the relative position of the second brewing module part (4).

10. A drinks preparation machine according to claim 9, wherein the control (104) is configured to determine maxima of the measured parameter in an evaluation region (120) of the relative positions, said maxima being above the second comparative value (111) but below the first comparative value (103), as well as to determine the relative position of the occurrence of each maximum, in order to determine the mentioned events.

11. A drinks preparation machine according to one of the preceding claims, comprising a rotary encoder which, after each positional change of the second brewing module part (4) relative to the first brewing module part (3) by one step, transmits to the control a signal which is counted as a step, in order to determine therefrom the current relative position of the second brewing module part (4).

12. A drinks preparation machine according to one of the preceding claims, further comprising a capsule recognition module (5) which is configured to recognise, on the basis of an optical characteristic of the portion capsule (10), whether such a capsule is brought into the drinks preparation machine and which type of portion capsule it is, wherein the capsule recognition module (5) is arranged ahead of the brewing module (1) and wherein a transfer of the portion capsule (10) from the capsule recognition module (5) into the brewing module can be controlled by the position of the second brewing module part (4).

13. A method for operating a drinks preparation machine according to one of the preceding claims, **characterised by** the following steps:
- determining whether the second brewing module part (4) correctly moves to one or more positions which are to be moved to during the method;
- stopping the electrical drive (101) and starting an initialisation routine (300) for bringing the drinks preparation machine back into normal operation in the case that a position was not correctly moved to.

14. A method according to claim 13, further comprising the steps
- recognising whether a portion capsule (10) has been inserted into the capsule insert opening (11);
- recognising the type of the inserted portion capsule (10);
- restricting the operating modes which can be selected by the user and which can be assumed by the drinks preparation machine, in dependence of whether a portion capsule (10) has been recognised and/or in dependence of the recognised portion capsule type.

15. A method according to claim 13 or 14, wherein the initialisation routine (300) comprises at least one of the following steps:
- determining the filling level and/or the position of one or more components of the drinks preparation machine which are different from the second brewing module part (4) and its drive;
- informing the user about one or more actions to be carried out;
- determining whether the user has carried out one of the actions;
- moving of the second brewing module part (4) to different positions;
- determining whether the different positions can be correctly moved to;
- determining whether events occur to which one is not to react with an immediate stopping of the electric drive (101);
- completing the initialisation routine (300) and returning of the drinks preparation machine back into normal operation in case that the different positions can be correctly moved to and no events as mentioned can be determined;
- determining whether a position has not been correctly moved to for the first time within the initialisation routine (300).

## Revendications

1. Machine de préparation de boissons servant à préparer une boisson à partir d'une portion en capsule (10), la machine présentant
- un boîtier (2) qui présente une ouverture (11) d'introduction de capsule par laquelle la portion en capsule (10) peut être introduite,
- un module d'infusion (1) présentant une première partie (3) de module d'infusion et une deuxième partie (4) de module d'infusion, une chambre d'infusion qui lors de l'opération d'infusion entoure au moins en partie la portion en capsule (10) placée en position d'infusion pouvant être formée par la première et la deuxième partie de module d'infusion, le module d'infusion (1) étant conçu pour infuser une boisson infusée par introduction d'un liquide d'infusion dans le portion en capsule (10) et pour extraire hors de la portion en capsule (10) la boisson infusée,
et présentant en outre un entraînement électrique (101) permettant le déplacement de la deuxième partie (4) de module d'infusion par rapport à la première partie (3) de module d'infusion, ainsi qu'une commande (104) qui commande l'entraînement électrique (101), **caractérisée en ce que**
la commande (104) est conçue pour déterminer à tout instant la position de la deuxième partie (4) de module d'infusion par rapport à la première partie (3) de module d'infusion.

2. Machine de préparation de boissons selon la revendication 1, dans laquelle la commande (104) est conçue pour sélectionner le nombre d'étapes duquel l'entraînement électrique (101) a déplacé la deuxième partie (4) de module d'infusion par rapport à la première et pour déterminer la position relative à tout instant à partir du nombre d'étapes sélectionné.

3. Machine de préparation de boissons selon la revendication 2, dans laquelle les étapes sont comptées en tant qu'impulsions de rotation ou impulsions d'un moteur pas-à-pas.

4. Machine de préparation de boissons selon l'une des revendications précédentes, dans laquelle la commande (104) présente un ensemble de mesure (102) qui surveille un paramètre qui caractérise la puissance électrique prélevée par l'entraînement électrique (101) .

5. Machine de préparation de boissons selon la revendication 4, dans laquelle la commande (104) est conçue pour comparer le paramètre mesuré à une première valeur comparative (103) pour vérifier si une condition d'arrêt est remplie, la commande (104) interrompant l'entraînement électrique (101) au cas où une condition d'arrêt est remplie.

6. Machine de préparation de boissons selon la revendication 5, dans laquelle la commande (104) est conçue pour vérifier à l'aide de la position qui a été déterminée si la condition d'arrêt a été remplie en une position de la deuxième partie (4) de module d'infusion qui est caractéristique d'une opération d'infusion ou si le fait que la condition d'arrêt est remplie résulte d'un défaut de fonctionnement de la machine de préparation de boissons.

7. Machine de préparation de boissons selon l'une des revendications 5 ou 6, dans laquelle la machine de préparation de boissons est conçue pour exécuter au moins l'une des étapes ci-dessous après que l'entraînement électrique (101) a été arrêté parce qu'une condition d'arrêt était remplie :
- informer l'utilisateur sur les manipulations à effectuer,
- déterminer l'état de remplissage et/ou la position d'un ou plusieurs des composants de la deuxième partie (4) de module d'infusion et de l'entraînement de la machine de préparation de boissons,
- lancer une routine d'initialisation (300) dans le cadre de laquelle la deuxième partie (4) de module d'infusion passe par différentes positions caractéristiques définies par la routine d'initialisation (300) et
- vérifier si un défaut de fonctionnement ou un événement auquel il ne faut pas réagir par une arrêt immédiat de l'entraînement électrique (101) survient lors du passage par les différentes positions caractéristiques définies par la routine d'initialisation (300) et si ce défaut de fonctionnement ou cet événement sont survenus deux fois successives sans que la machine (1) de préparation de boissons ait quitté entre ces deux fois la routine d'initialisation (300) dans le cadre de laquelle la deuxième partie (4) de module d'infusion passe par les différentes positions caractéristiques
avant de revenir en mode de fonctionnement normal.

8. Machine de préparation de boissons selon l'une des revendications 4 à 7, dans laquelle la commande (104) est conçue pour comparer le paramètre de l'entraînement électrique (101) qui est mesuré à une deuxième valeur comparative (111), la deuxième valeur comparative (111) étant inférieure à la première valeur comparative (103) et la commande (104) étant en outre conçue pour produire un signal d'avertissement au cas où le paramètre mesuré est supérieur à la deuxième valeur comparative (111) mais inférieur à la première valeur comparative (103), pour vérifier si des événements auxquels il ne faut pas réagir par un arrêt immédiat de l'entraînement électrique (101) sont survenus pendant que la machine de préparation de boissons est en fonctionnement.

9. Machine de préparation de boissons selon l'une des revendications 4 à 8, présentant en outre une mémoire (106) de données dans laquelle est conservé le paramètre mesuré dans chaque position relative de la deuxième partie (4) de module d'infusion par rapport à la première partie (3) de module d'infusion, pour produire une courbe de mesure du paramètre mesuré sur l'entraînement électrique (101) en fonction de la position relative de la deuxième partie (4) de module d'infusion.

10. Machine de préparation de boissons selon la revendication 9, dans laquelle la commande (104) est conçue pour détecter dans une plage d'évaluation (120) des positions relatives des maximums du paramètre mesuré qui sont supérieurs à la deuxième valeur comparative (111) mais inférieurs à la première valeur comparative (103), ainsi que la position relative dans laquelle chaque maximum survient, en vue de vérifier si lesdits événements sont survenus.

11. Machine de préparation de boissons selon l'une des revendications précédentes, présentant un capteur de rotation qui lors de chaque modification d'un pas de la position de la deuxième partie (4) de module d'infusion par rapport à la première partie (3) de module d'infusion transmet à la commande un signal compté comme pas pour ainsi déterminer la position relative actuelle de la deuxième partie (4) de module d'infusion.

12. Machine de préparation de boissons selon l'une des revendications précédentes, présentant en outre un module (5) de détection de capsule conçu pour détecter sur la base d'une propriété optique de la portion en capsule (10) si une capsule a été placée dans la machine de préparation de boissons et de quel type de portion en capsule il s'agit, le module (5) de détection de capsule étant disposé en amont du module d'infusion (1) et le transfert de la portion en capsule (10) depuis le module (5) de reconnaissance de capsule jusque dans le module d'infusion pouvant être commandé par la position de la deuxième partie (4) de module d'infusion.

13. Procédé de conduite d'une machine de préparation de boissons selon l'une des revendications précédentes, **caractérisé par** les étapes ci-dessous :
- vérifier si la deuxième partie (4) de module d'infusion est passée correctement par une ou plusieurs positions par lesquelles il faut passer pendant le procédé,
- arrêter l'entraînement électrique (101) et lancer une routine d'initialisation (300) pour ramener la machine de préparation de boissons en mode de fonctionnement normal au cas où une position n'a pas été parcourue correctement.

14. Procédé selon la revendication 13, présentant en outre les étapes qui consistent à :
- vérifier si une portion en capsule (10) a été placée dans l'ouverture (11) d'introduction de capsule,
- reconnaître le type de portion en capsule (10) qui a été placée,
- restreindre les modes de fonctionnement que peut sélectionner un utilisateur et que la machine de préparation de boissons peut prendre en fonction de la détection de la portion en capsule (10) et/ou en fonction du type de portion en capsule qui a été reconnu.

15. Procédé selon les revendications 13 ou 14, dans lequel la routine d'initialisation (300) présente au moins l'une des étapes suivantes :
- déterminer l'état de remplissage et/ou la position d'un ou plusieurs des composants de la deuxième partie (4) de module d'infusion et de l'entraînement de la machine de préparation de boissons,
- informer l'utilisateur qu'une ou plusieurs manipulations doivent être effectuées,
- vérifier si l'utilisateur a effectué l'une des manipulation,
- faire passer la deuxième partie (4) de module d'infusion par différentes positions,
- vérifier si les différentes positions peuvent être parcourues correctement,
- vérifier si des événements auxquels il ne faut pas réagir par un arrêt immédiat de l'entraînement électrique (101) surviennent,
- interrompre la routine d'initialisation (300) et ramener la machine de préparation de boissons en mode de fonctionnement normal au cas où les différentes positions peuvent être parcourues correctement et qu'aucun desdits événements n'a pu être constaté et
- vérifier si dans le cadre de la routine d'initialisation (300) une position a été une première fois parcourue de manière incorrecte.
